# EUROPÄISCHE PATENTSCHRIFT

(11) **EP 2 535 134 B1**
(45) Veröffentlichungstag und Bekanntmachung des Hinweises auf die Patenterteilung: **24.01.2018**
(21) Anmeldenummer: 11170148.8
(22) Anmeldetag: 16.06.2011
(51) Int. Cl.: B23F 9/10, B23F 21/22

(54) **Verfahren zum Vorverzahnen mehrerer unterschiedlicher Kegelräder**
Method for pre-toothing multiple different bevelled wheels
Procédé pour pré-tailler plusieurs roues coniques différentes

(43) Veröffentlichungstag der Anmeldung: 19.12.2012
(73) Patentinhaber: Klingelnberg AG, 8050 Zürich (CH)
(72) Erfinder: Ribbeck, Karl Martin, 42897 Remscheid (DE)
(74) Vertreter: Heusch, Christian

(56) Entgegenhaltungen:
- US-A- 2 091 575
- US-A- 2 342 232

## Beschreibung

### Gebiet der Erfindung

Gegenstand der Erfindung ist ein Verfahren zum Vorverzahnen mehrerer unterschiedlicher Kegelräder.

### Hintergrund der Erfindung, Stand der Technik

Es gibt zahlreiche Verfahren zur Fertigung von Zahnrädern. Bei der spanenden Herstellung von Spiralkegelrädern unterscheidet man zwischen dem Einzelteilverfahren und dem kontinuierlichen Verfahren, das teilweise auch als kontinuierliches Teilungsverfahren bezeichnet wird.

Beim kontinuierlichen Verfahren (auch kontinuierliches Wälzfräsen oder im Englischen continuous indexing process bzw. face hobbing genannt) kommt beispielsweise ein Messerkopfwerkzeug mit gruppenweise angeordneten Innenmessern (IM) und Aussenmessern (AM) zum Einsatz, um die konvexen und konkaven Flanken der Zähne eines Werkstücks zu schneiden. Das Werkstück wird beim kontinuierlichen Verfahren in einer Aufspannung im pausenlosen Verfahren fertig geschnitten. Das kontinuierliche Verfahren basiert auf sehr komplexen, gekoppelten Bewegungsabläufen, bei denen das Werkzeug und das zu bearbeitende Werkstück relativ zueinander eine kontinuierliche Teilungsbewegung ausführen. Die Teilungsbewegung ergibt sich aus dem koordinierten Antreiben mehrere Achsantriebe einer entsprechenden Maschine. Beim kontinuierlichen Teilverfahren sind die Drehung des Messerkopfes und die des zu bearbeitenden Werkstücks so gekoppelt, dass sich jeweils nur eine Messergruppe durch eine Zahnlücke bewegt und sich die nächste Messergruppe durch die nächste Lücke bewegt. Die Teilung erfolgt also kontinuierlich und alle Lücken werden quasi gleichzeitig erzeugt. Durch diese gekoppelten Bewegungen ergibt sich eine verlängerte Epizykloide als Flankenlängslinie auf dem Planrad des zu erzeugenden Kegelrads.

Beim teilenden Verfahren (auch Einzelteilverfahren oder im Englischen Face Milling genannt) wird eine Zahnlücke bearbeitet, dann erfolgt eine relative Verschiebungsbewegung zum Herausfahren des Werkzeugs aus einer Zahnlücke und eine sogenannte Teilungsbewegung (Teilungsdrehung), bei der sich das Werkstück relativ zum Werkzeug dreht, bevor dann die nächste Zahnlücke bearbeitet wird. Es wird somit Schritt für Schritt und Lücke für Lücke ein Zahnrad gefertigt. Beim Einzelteilverfahren kann ein erster Messerkopf mit Innenschneiden und Aussenschneiden eingesetzt werden, um Innenflanken (konvexe Zahnflanken) am Werkstück zu schneiden und Aussenflanken vorbereitend zu bearbeiten. Die Aussenschneiden erzeugen nicht die endgültige Geometrie der Aussenflanken. Dann kann der erste Messerkopf gegen einen zweiten Messerkopf ausgetauscht werden, der mit Aussenschneiden bestückt ist, um die Aussenflanken (konkave Zahnflanken) am Werkstück fertig zu schneiden. Diese Vorgehensweise wird auch als einzelseitiges Schneiden bezeichnet. Die Schneiden der Werkzeuge sind kreisförmig angeordnet (z.B. bei einem Stirnmesserkopf) und die Flankenlinien, die am Werkstück erzeugt werden, haben daher die Form eines Kreisbogens.

Es findet beim beschriebenen Einzelteilverfahren ein Messerkopfwechsel statt, was einerseits zu einer Verlängerung der gesamten Bearbeitungsdauer führt und was andererseits Ungenauigkeiten mit sich bringen kann, da jedes Umspannen oder Neuaufspannen zu kleinen Abweichungen von der Idealposition führen kann. Es ist ein Vorteil des einzelseitigen Einzelteilverfahrens mit zwei separaten Messerköpfen, dass beide Zahnflanken quasi unabhängig voneinander optimiert werden können.

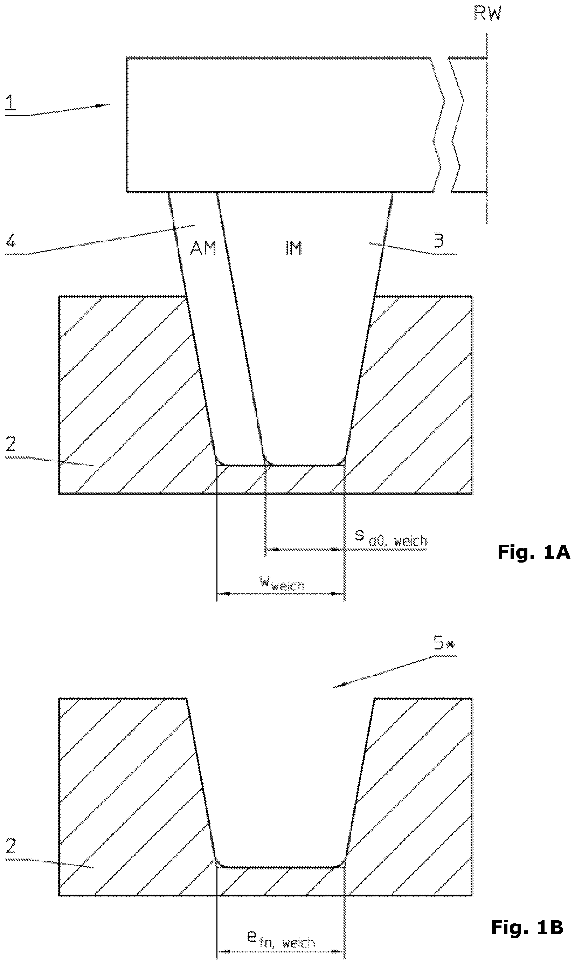

Das sogenannte Completing-Verfahren ist ein spezielles Einzelteilverfahren, das vorzugsweise in der Grossserie eingesetzt wird. In Fig. 1A ist eine Abbildung eines Werkzeugs 1 mit einem Innenmesser 3 und einem Aussenmesser 4 gezeigt, das zum Completing im Zweiflankenschnitt eingesetzt wird. Das Werkzeug 1 wird zum Vorverzahnen eingesetzt. Das Aussenmesser 4 schneidet beim Vorverzahnen die Aussenflanken (konkave Zahnflanken) am Werkstück 2 und das Innenmesser 3 schneidet die Innenflanken (konvexe Zahnflanken) am Werkstück 2. Die Werkzeugspitzenbreite der Innen- und Aussenmesser 3, 4 ist hier mit sₐ₀, _{weich} bezeichnet. Diese Werkzeugspitzenbreite sₐ₀, _{weich} ist kleiner als die Spitzenweite w_{weich} der beiden Messer 3, 4 zusammen, wie in Fig. 1A gezeigt.

In Fig. 1B ist die Zahnlücke 5* nach dem Vorverzahnen gezeigt. Die effektive Lückenweite e_{fn,weich} der vorverzahnten Zahnlücke 5* ist gleich groß wie die Spitzenweite w_{weich} der beiden Messer 3, 4.

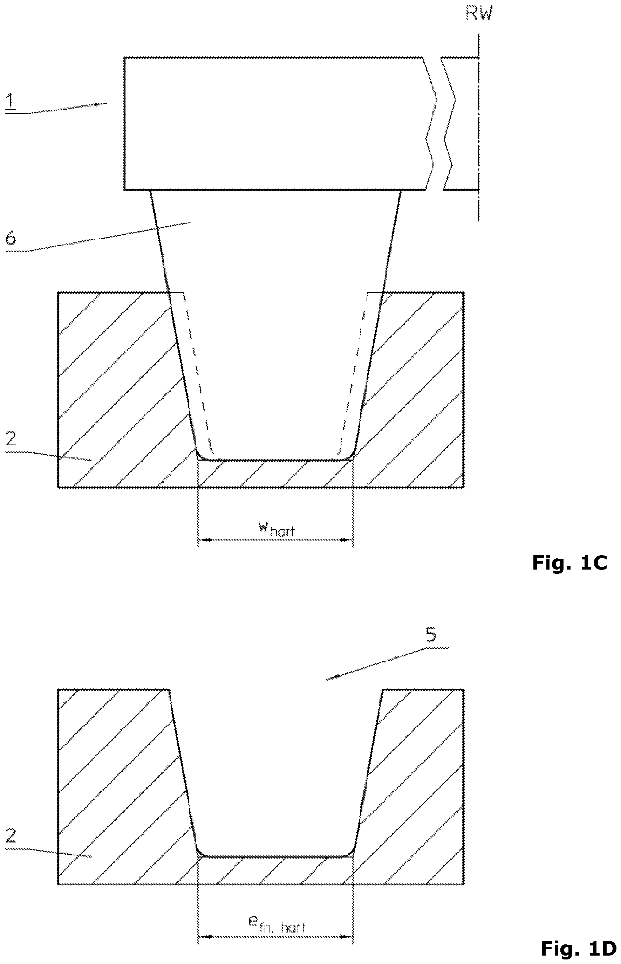

Nun kommt nach dem Vorverzahnen und Härten ein vollschneidendes Werkzeug 6 (meist eine Schleifscheibe) mit entsprechendem Profil zum Einsatz, um die Zahnlücke 5* fertig zu bearbeiten. Der entsprechende Schritt ist in Fig. 1C gezeigt. Die Spitzenweite des vollschneidenden Werkzeugs 6 wird hier mit wₕₐᵣₜ bezeichnet. In Fig. 1D ist die endgültige Zahnlücke 5 zu sehen. Sie hat eine endgültige Lückenweite e_{fn,hart}, die gleich groß ist wie die Spitzenweite wₕₐᵣₜ des vollschneidenden Werkzeugs 6.

Ein gleichmäßiges Flankenaufmaß der vorverzahnten Zahnlücke 5* in Normalenrichtung wird beim Completing meist durch Veränderung der Werkzeugspitzenradien bei sonst gleichen Maschineneinstellungen erreicht. Dabei wird der Spitzenradius des Innenmessers 3 um das Flankenaufmaß größer gegenüber dem Spitzenradius des vollschneidenden Werkzeugs 6 oder der Schleifscheibe für die Hartbearbeitung, während der Spitzenradius des Aussenmessers 4 um das gleiche Aufmaß kleiner wird.

Ein Tellerrad oder Ritzel werden beim Completing-Verfahren im Zweiflankenschnitt komplett fertig bearbeitet. Gegenüber anderen Einzelteilverfahren zeichnet sich das Completing-Verfahren durch höhere Produktivität (doppelte Zerspanleistung) aus, jedoch ist eine Veränderung der Flankenform schwieriger, da Veränderungen der Maschinenkinematik, wie bei allen Verfahren mit Zweiflankenschnitt, immer Einfluss auf beide Flanken haben. Es ist somit ein Nachteil des Completing-Verfahrens im Zweiflankenschnitt, dass sich bei einer Änderung einer Flanke mittels der Maschinenkinematik stets auch eine Änderung der anderen Flanke ergibt. Änderungen sind daher nur dann möglich, wenn sie "zweiflankenschnittverträglich" sind.

Aus der US-Schrift US2342232A, aus dem Jahr 1940, ist ein Verfahren zur Schruppbearbeitung (Weichfräsen) von Spiral-Kegelrädern und Hypoidrädern bekannt. Gemäß dieser Schrift kommt ein drehangetriebener Stirnfräser zum Einsatz, der einander gegenüberliegende, seitliche Schneidkanten aufweist. Während eine relative Wälzbewegung des Stirnfräsers mit dem Werkstück ausgeführt wird, wird eine Seite einer Zahnlücke fertig geschnitten während die gegenüber liegende Seite vorgeschnitten wird. Dann erfolgt eine Richtungsumkehr, um die gegenüber liegende Seite der Zahnlücke in entgegengesetzter Richtung fertig zu schneiden. Dabei wird das Abwälzverhaltnis angepasst.

Es gibt nun häufig Situationen, in denen mehrere ähnliche Kegelräder gefertigt werden müssen. Im Automobilsektor zum Beispiel unterscheiden sich die Kegelräder der verschiedenen Getriebetypen oft nur durch kleine Unterschiede in der Geometrie, wie Normalmodul, Eingriffswinkel und Übersetzungsverhältnisse. Bisher werden mehrere Fräswerkzeuge und mehrere Stabmessersätze vorgehalten, um je nach Bedarf den einen Typ eines Kegelrads oder einen anderen Typ herstellen zu können. Stets müssen die Stabmesser aus dem Messerkopf entnommen und andere Stabmesser positionsgenau eingesetzt werden, oder es wird der ganze Messerkopf durch einen anders bestückten ausgetauscht. Der Aufwand ist groß und es ist Kapital gebunden, da jeweils mehrere verschiedene Stabmessersätze oder komplett bestückte Messerköpfe vorgehalten werden müssen.

Aufgabe der vorliegenden Erfindung ist es, ein Verfahren zu entwickeln, das die Werkzeugkosten und den Aufwand in solchen Situationen reduzieren hilft.

Diese Aufgabe wird gemäß der vorliegenden Erfindung durch ein Verfahren gelöst, das auf dem Prinzip des Semi-Completing Verfahrens beruht.

Kennzeichnend für das Verfahren der Erfindung ist, dass mit einem Universalwerkzeug, das mit paarweise angeordneten Innen- und Aussenmessern bestückt ist, ein Semi-Completing Verfahren ausgeführt wird, um verschiedene ähnliche Kegelräder fertig vorzuverzahnen.

Die Erfindung dient zur Herstellung, respektive zur Vorverzahnung verschiedener ähnlicher Kegelräder mit ein und demselben Universalfräswerkzeug. Mit diesem Universalfräswerkzeug können verschiedene Kegelräder einer Gruppe von Kegelrädern gefertigt werden, solange diese Kegelräder ähnlich sind. Als ähnliche Kegelräder werden hier Kegelräder angesehen, deren mittleres Normalmodul nur geringfügig abweichen, deren Eingriffswinkel nur geringfügig unterschiedlich sind und deren Übersetzungsverhältnisse vergleichbar sind, damit sich ähnliche Krümmungsverhältnisse an den Zähnen ergeben.

Gemäss Erfindung werden beim Vorverzahnen die konvexen und konkaven Flanken des Kegelrades mit getrennten Maschineneinstellungen gefräst.

Gemäss Erfindung kommen
- entweder paarweise angeordnete Innenmesser und Aussenmesser zum Einsatz, wobei jedes Innenmesser eine Schneide hat, die Innenschneide genannt wird, und jedes Aussenmesser eine Schneide hat, die Aussenschneide genannt wird,
- oder Vollmesser mit Innenschneiden und Aussenschneiden zum Einsatz.

Es ist ein Vorteil der Erfindung, dass das Universalfräswerkzeug beim Vorverzahnen ähnlicher Kegelräder nicht gewechselt werden muss.

Das erfindungsgemässe Verfahren kann sowohl als Trocken- oder Nassbearbeitung durchgeführt werden.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1A**: zeigt eine schematische Schnittdarstellung eines bekannten Completing-Verfahrens während dem Vorverzahnen;
- **FIG. 1B**: zeigt eine schematische Schnittdarstellung einer Zahnlücke nach dem Vorverzahnen nach Fig. 1A;
- **FIG. 1C**: zeigt eine schematische Schnittdarstellung eines bekannten Verfahrens zur Hartbearbeitung, das nach dem Vorverzahnen und Härten ausgeführt wird;
- **FIG. 1D**: zeigt eine schematische Schnittdarstellung der Zahnlücke nach der Hartbearbeitung nach Fig. 1C;
- **FIG. 2A**: zeigt eine schematische Schnittdarstellung einer ersten Bearbeitungsphase während dem Fertigvorverzahnen der Aussenflanke mit einer Aussenschneide eines Aussenmessers und dem gleichzeitigen Vorverzahnen der Innenflanke mit einer Innenschneide eines Innenmessers;
- **FIG. 2B**: zeigt eine schematische Draufsicht eines Kegelrads während der in Fig. 2A gezeigten ersten Bearbeitungsphase;
- **FIG. 2C**: zeigt eine schematische Schnittdarstellung einer zweiten Bearbeitungsphase während dem Fertigvorverzahnen der Innenflanke mit der Innenschneide des Innenmessers;
- **FIG. 2D**: zeigt eine schematische Draufsicht eines Kegelrads während der in Fig. 2C gezeigten zweiten Bearbeitungsphase;
- **FIG. 2E**: zeigt eine schematische Schnittdarstellung einer Zahnlücke nach dem Fertigvorverzahnen nach Fig. 2A bis 2D;
- **FIG. 2F**: zeigt eine schematische Schnittdarstellung eines bekannten Verfahrens zur Hartbearbeitung, das nach dem Fertigvorverzahnen und Härten ausgeführt wird;
- **FIG. 2G**: zeigt eine schematische Schnittdarstellung einer Zahnlücke nach der Hartbearbeitung nach Fig. 2F;
- **FIG. 3A**: zeigt eine schematische Schnittdarstellung einer ersten Bearbeitungsphase während dem Fertigvorverzahnen der Aussenflanke eines weiteren Kegelrads mit einer Aussenschneide eines Aussenmessers und dem gleichzeitigen Vorverzahnen der Innenflanke mit der Innenschneide eines Innenmessers, wobei dasselbe Universalwerkzeug wie in Fig. 2A zum Einsatz kommt;
- **FIG. 3B**: zeigt eine schematische Schnittdarstellung einer zweiten Bearbeitungsphase während dem Fertigvorverzahnen der Innenflanke des weiteren Kegelrads nach Fig. 3A mit der Innenschneide des Innenmessers;
- **FIG. 4A**: zeigt eine schematische Schnittdarstellung einer ersten Bearbeitungsphase während dem Fertigvorverzahnen der Aussenflanke mit einer Aussenschneide eines Vollmessers und dem gleichzeitigen Vorverzahnen der Innenflanke mit der Innenschneide des Vollmessers;
- **FIG. 4B**: zeigt eine schematische Schnittdarstellung einer zweiten Bearbeitungsphase während dem Fertigvorverzahnen der Innenflanke mit der Innenschneide des Vollmessers;
- **FIG. 4C**: zeigt eine schematische Schnittdarstellung einer Zahnlücke nach dem Fertigvorverzahnen nach Fig. 4A bis 4B;
- **FIG. 4D**: zeigt eine schematische Schnittdarstellung eines bekannten Verfahrens zur Hartbearbeitung, das nach dem Fertigvorverzahnen und Härten ausgeführt wird;
- **FIG. 4E**: zeigt eine schematische Schnittdarstellung einer Zahnlücke nach der Hartbearbeitung nach Fig. 4D;
- **FIG. 5**: zeigt eine Perspektivansicht eines beispielhaften Universalwälz-fräswerkzeugs, das mit einem Stabmessersatz mit mehreren Paaren von Innenmessern und Aussenmessern bestückt ist.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

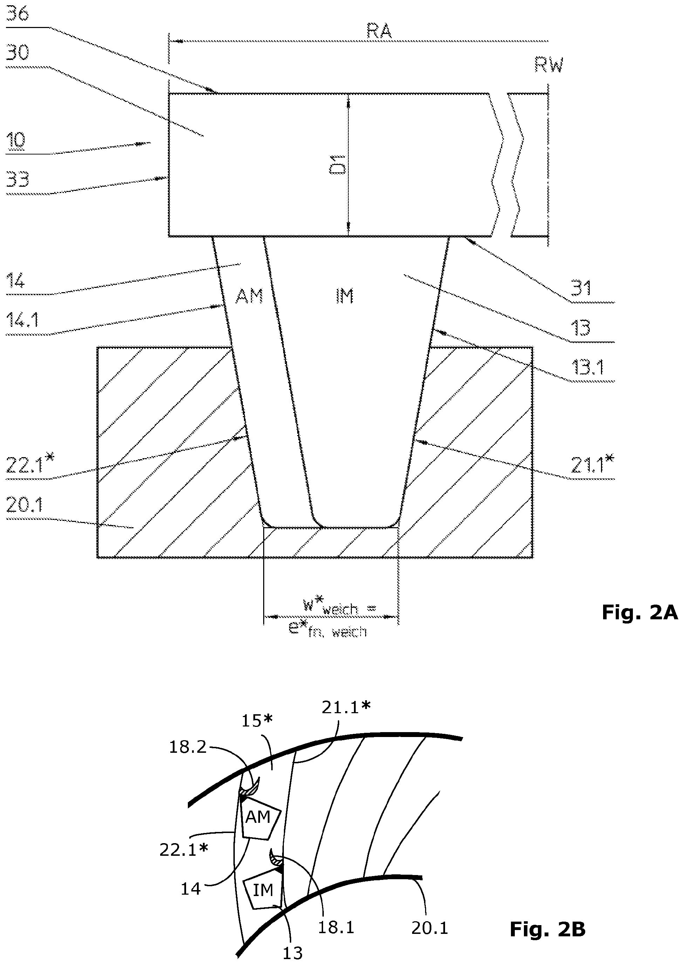

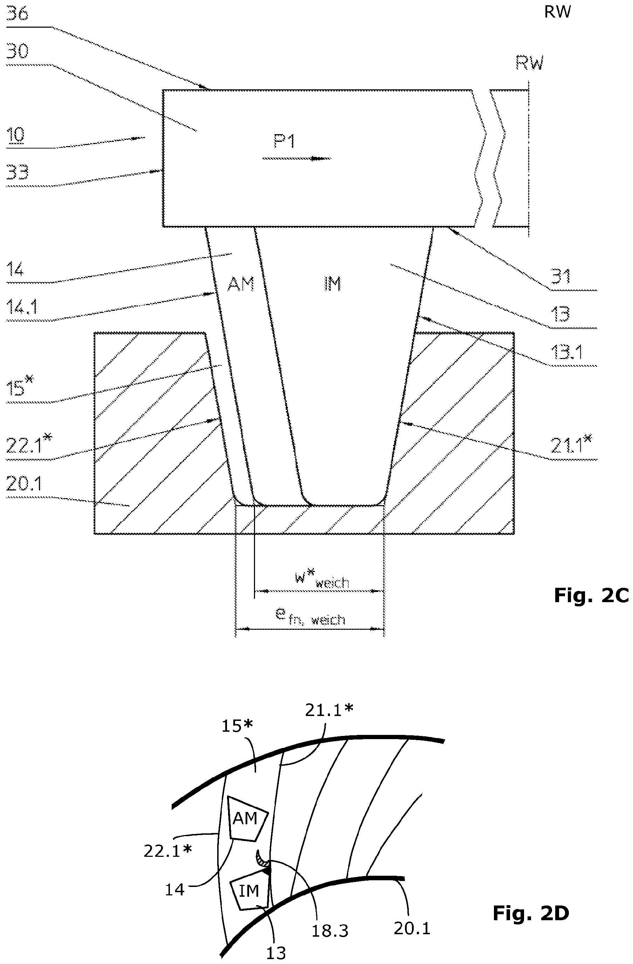

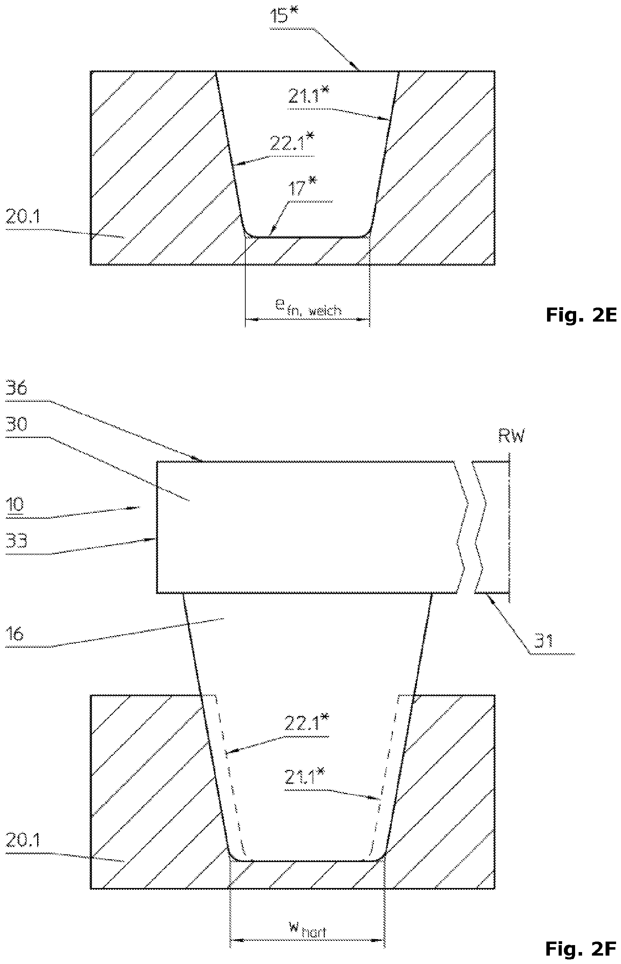

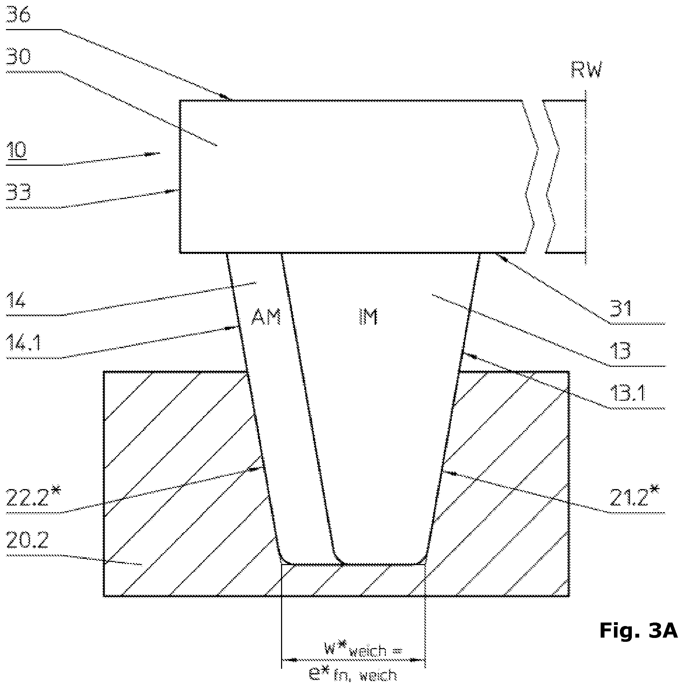

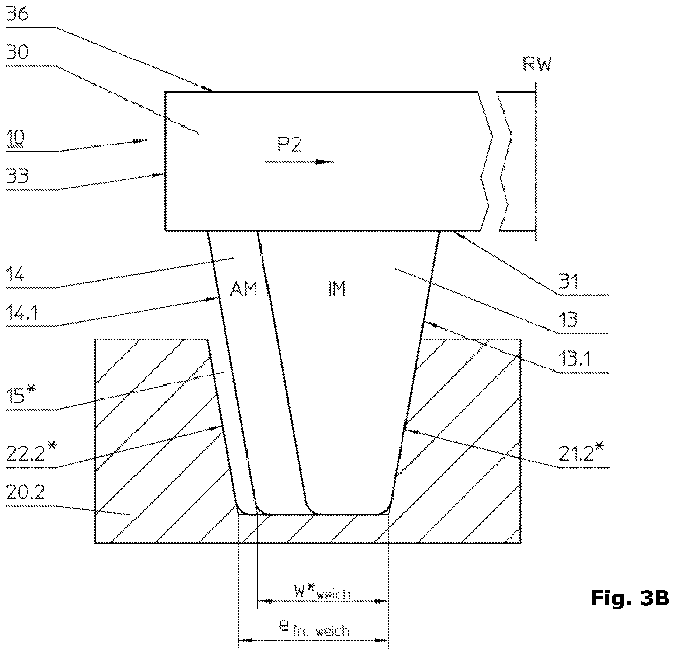

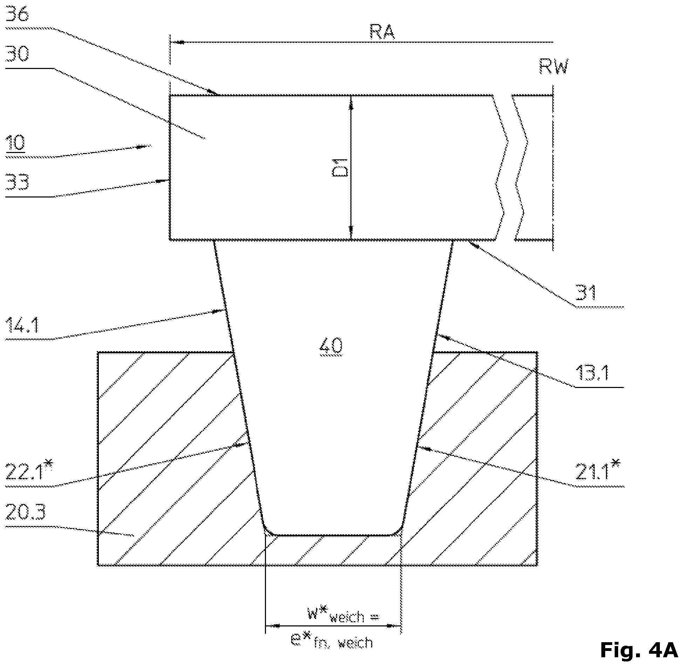

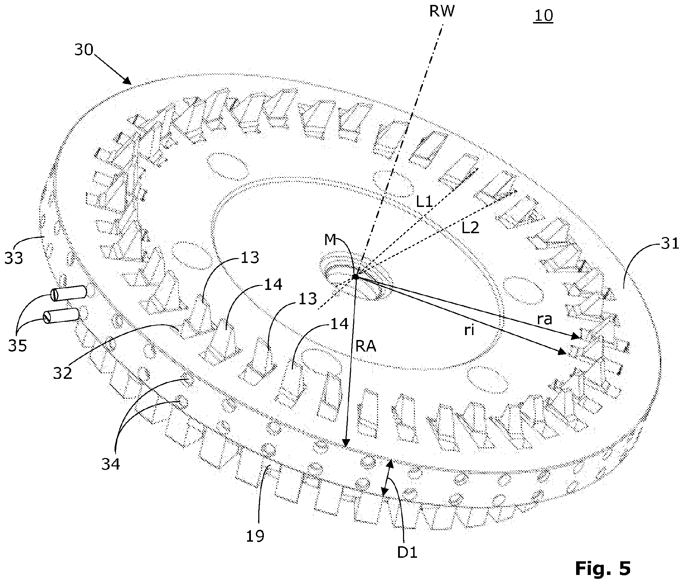

Die Figuren 2A bis 3B sind schematisch und nicht-maßstäblich. Der Einfachheit halber ist in den Figuren 2A, 2C, 2F, 3A, 3B nur der Grundkörper 30 des Universalfräswerkzeugs 10 als Querschnitt durch eine kreisrunde Scheibe gezeigt. Die werkstückseitige Stirnfläche 31, auf der die Innenmesser 13 und Aussenmesser 14 der Figuren 2A bis 3B, respektive die Vollmesser der Figuren 4A bis 4D, angeordnet sind, entspricht der in Fig. 5 sichtbaren Oberseite der kreisrunden Scheibe. Die werkstückabgewandte Stirnfläche 36 ist in den 2A, 2C, 2F, 3A, 3B, 4A, 4B, 4D als glatte (nicht strukturierte) Fläche gezeigt. In Fig. 5 ist diese werkstückabgewandte Stirnfläche 36 strukturiert, da sie Abdrehungen, Bohrungen und Funktionsflächen z.B. zum Befestigen des Universalfräswerkzeugs 10 an einem Adapter oder einer Werkzeugspindel umfasst..

Die Dicke D1 des Grundkörpers 30 ist in den Figuren 2A, 4A und 5 gezeigt, um die entsprechenden Elemente des Universalfräswerkzeugs 10 zueinander in Bezug zu setzen. Der Aussendurchmesser des Grundkörpers 30 ist in den Figuren 2A, 4A und 5 mit RA bezeichnet.

Die Erfindung wird nun anhand der Figuren 2A und folgende beschrieben. Diese Figuren zeigen einige Bearbeitungsphasen des erfindungsgemässen Verfahrens in einer stark schematisierten Darstellung. Jede dieser Figuren zeigt nur eine einzige Zahnlücke eines Werkstücks 20.1 und die entsprechenden Messer 13, 14 des Universalwerkzeugs 10.

Es wird, wo erforderlich, bewusst zwischen Vorbearbeitung und Fertigvorbearbeitung unterschieden. Diese Begriffe werden anhand der folgenden Beschreibung und der Figuren verdeutlicht. Ausserdem wird im Folgenden ein Unterschied zwischen der Weichbearbeitung, respektive dem Weichverzahnen, und der Hartbearbeitung, respektive dem Hartverzahnen gemacht. Vor dem Hartverzahnen wird das Werkstück, hier als Kegelrad 20.1, 20.2 bezeichnet, einer Temperaturbehandlung unterzogen. Entsprechend werden im Folgenden die Worte Vorverzahnen, Weichfräsen, usw. eingesetzt, wenn es um Bearbeitungsschritte am "weichen" Werkstück geht.

Mit einem hochgestellten "*" sind im Folgenden vorverzahnte Elemente gekennzeichnet. 15* bezeichnet zum Beispiel die Zahnlücke vor dem Härten und 15 die Zahnlücke nach dem Härten und Hartverzahnen.

Gemäss Erfindung geht es darum, mehrere verschiedene ähnliche Kegelräder mit ein und demselben Universalwälzfräswerkzeug 10 weichzufräsen. Die verschiedenen Kegelräder werden mit dem Bezugszeichen 20 und einem Index bezeichnet. Ein erstes Kegelrad wird mit 20.1 und ein zweites, verschiedenes aber ähnliches Kegelrad wird mit 20.2 bezeichnet. Mit dem Universalwälzfräswerkzeug 10 können selbstverständlich auch mehr als nur zwei ähnliche Kegelräder 20.1, 20.2 weichgefräst werden.

Gemäss Erfindung ist das Universalwälzfräswerkzeug 10 mit einem Stabmessersatz mit mehreren Paaren von Innenschneiden 13.1 und Aussenschneiden 14.1 bestückt, die z.B., wie in den Figuren 2A und 2C zu erkennen ist, an Innenmessern 13 oder Aussenmessern angeordnet sein können. Die Innenschneiden 13.1 und Aussenschneiden 14.1 können aber auch an Vollmessern 40, wie in den Figuren 4A bis 4D gezeigt, angeordnet sein. Die Paare sind jeweils identisch ausgeführt, d.h. das Universalwälzfräswerkzeug 10 ist zum Beispiel mit n identischen Innenschneiden 13.1 und n identischen Aussenschneiden 14.1 bestückt (n ist bei allen Ausführungsformen eine ganze Zahl grösser zwei). Die Innenschneiden 13.1 und Aussenschneiden 14.1 sind bei allen Ausführungsformen paarweise entlang des Umfangs des Universalwälzfräswerkzeugs 10 angeordnet, wobei jeweils eine Innenschneide 13.1 auf eine Aussenschneide 14.1 folgt.

Das Universalwälzfräswerkzeug 10 wird auf einer ersten Fräsmaschine zum Einsatz gebracht, um ein erstes Kegelrad 20.1 der mehreren verschiedenen Kegelräder vorzuverzahnen.

Vorzugsweise kommt das Universalwälzfräswerkzeug 10 bei allen Ausführungsformen auf einer 5-Achsen-CNC-Fräsmaschine zum Einsatz, da bei einer 5-Achsen-CNC-Fräsmaschine die Verstellmöglichkeiten gegeben sind, die zum Ausführen des neuen Verfahrens erforderlich sind. Die Erfindung kann jedoch auch auf älteren Maschinen und auf Maschinen mit mehr als 5 Achsen angewendet werden.

Gemäss Erfindung werden in einer ersten Bearbeitungsphase die Paare von Innenschneiden 13.1 und Aussenschneiden 14.1 zur gleichzeitigen fräsenden Bearbeitung der konvexen Innenflanken 21.1* und der konkaven Aussenflanken 22.1* an dem ersten Kegelrad 20.1 eingesetzt. Eine Momentaufnahme dieser ersten Bearbeitungsphase eines ersten Kegelrads 20.1 ist in Fig. 2A gezeigt. Es ist ein Ausschnitt des ersten Kegelrads 20.1 zu erkennen. Im gezeigten Moment bearbeitet die Innenschneide 13.1 eine konvexe Innenflanke 21.1* und die Aussenschneide 14.1 eine konkave Aussenflanke 22.1*. Im gezeigten Beispiel werden die konkaven Aussenflanken 22.1* während der ersten Bearbeitungsphase fertig vorverzahnt (Fertigvorbearbeitung genannt), d.h. die Aussenschneiden 14.1 kommen nur in dieser ersten Bearbeitungsphase zur fräsenden Bearbeitung zum Einsatz. Die konvexen Innenflanken 21.1* sind während der ersten Bearbeitungsphase jedoch nur vorverzahnt worden, d.h. sie haben noch nicht das erwünschte Aufmass erreicht.

Fig. 2B zeigt eine stark schematisierte Draufsicht der ersten Bearbeitungsphase gemäss Fig. 2A. In Fig. 2B sind ein Innenmesser 13 und ein Aussenmesser 14 zu erkennen, während sie hintereinander durch die zu bearbeitende Zahnlücke 15* laufen. In der gezeigten Darstellung bewegen sich das Innenmesser 13 und das Aussenmesser 14 solidarisch mit einer nach oben gerichteten Kreisbahnbewegung um den Messerkopfmittelpunkt M (siehe Fig. 5). Während der ersten Bearbeitungsphase kommen beide Messer 13 und 14 zum Einsatz. Die in der ersten Bearbeitungsphase aktiven Schneiden 13.1, 14.1 sind in Fig. 2B durch schwarze Ecken gekennzeichnet. Ausserdem sind die Späne 18.1, 18.2 angedeutet, die durch die fräsende Bearbeitung entstehen. Nach der ersten Bearbeitungsphase sind die konkaven Aussenflanken 22.1* fertig vorverzahnt und die konvexen Innenflanken 21.1* sind lediglich vorverzahnt.

Nun werden in einer nachfolgenden zweiten Bearbeitungsphase dieselben Innenschneiden 13.1 zur fräsenden Fertigvorbearbeitung der konvexen Innenflanken 21.1* an dem Kegelrad 20.1 eingesetzt, wie in Fig. 2C gezeigt. Vor der zweiten Bearbeitungsphase wird mindestens eine Maschineneinstellung der Fräsmaschine geändert. In Fig. 2C ist das Vorgeben einer anderen Maschineneinstellung schematisch durch den Pfeil P1 dargestellt. Das Verstellen der Maschineneinstellung umfasst eine Werkstückverdrehung und eine Änderung von Radiale und Wälzwinkel des Universalwerkzeugs 10. Das Verstellen der Maschineneinstellung kann aber auch auf andere Art und Weise erfolgen.

Nach Abschluss der ersten Bearbeitungsphase hat die Zahnlücke 15* eine Lückenweite (= Fussweite), die mit e*_{fn,weich} gekennzeichnet ist, wie in Fig. 2A gezeigt. Die Lückenweite e*_{fn,weich} entspricht der Spitzenweite w_{weich} der beiden der Innen- und Aussenmesser 13, 14.Fig. 2D zeigt eine stark schematisierte Draufsicht der zweiten Bearbeitungsphase gemäss Fig. 2C. In Fig. 2D sind die Innenschneide 13.1 und Aussenschneide 14.1 zu erkennen, während sie hintereinander durch die zu bearbeitende Zahnlücke 15* laufen. In der gezeigten Darstellung bewegen sich das Innenmesser 13 und das Aussenmesser 14 solidarisch mit einer nach oben gerichteten Relativbewegung in Bezug auf das Kegelrad 20.1. Während der zweiten Bearbeitungsphase kommen nur die Innenschneiden 13.1 zum Einsatz. Die während der zweiten Bearbeitungsphase aktive Schneide 13.1 des Innenmessers 13 ist durch eine schwarze Ecke gekennzeichnet. Ausserdem ist der Span 18.3 angedeutet, der durch die fräsende Bearbeitung entsteht. Die Aussenschneiden 14.1 sind nicht aktiv.

Nach der zweiten Bearbeitungsphase sind alle Flanken 21.1* und 22.1* fertig vorverzahnt. Die fertig vorverzahnte Zahnlücke 15* ist in Fig. 2E gezeigt. Sie hat nun eine Lückenweite e_{fn,weich}, die grösser ist als die Lückenweite e*_{fn,weich}.

Gemäss Erfindung wird das Universalwälzfräswerkzeug 10 mit demselben Stabmessersatz auf der ersten oder einer zweiten Fräsmaschine zum Einsatz gebracht, um ein zweites Kegelrad 20.2 der mehreren ähnlichen Kegelräder vorzuverzahnen. Dieses zweite Kegelrad 20.2 unterscheidet sich von dem ersten Kegelrad 20.1 nur geringfügig.

Das Verfahren zum Weichfräsen von Kegelradverzahnungen mehrerer ähnlicher Kegelräder kann aber auch mit Vollmessern 40 ausgeführt werden, wie im Folgenden anhand eines weiteren Ausführungsbeispiels dargelegt wird.

In Figuren 4A - 4E ist ein weiteres Verfahren der Erfindung dargestellt. Hier kommen mehrere Vollmesser 40 mit Innenschneiden 13.1 und Aussenschneiden 14.1 zum Einsatz. Anders als in den bisher gezeigten und beschriebenen Ausführungsbeispielen, werden jeweils ein Innenmesser 13 und ein Aussenmesser 14 zusammengelegt zu einem Vollmesser 40 mit einer entsprechend angeordneten Innenschneide 13.1 und einer entsprechend angeordneten Aussenschneide 14.1.

In Fig. 4A ist ein Vollmesser 40 mit einer Innenschneide 13.1 und einer Aussenschneide 14.1 zu erkennen, während es durch die zu bearbeitende Zahnlücke 15* läuft. Die Innenschneide 13.1 und Aussenschneide 14.1 des Vollmessers 40 bewegen sich solidarisch mit einer Kreisbahnbewegung um den Messerkopfmittelpunkt M (siehe Fig. 5). Während der ersten Bearbeitungsphase kommen die Innenschneide 13.1 und die Aussenschneide 14.1 zum Einsatz, wie in Fig. 4A zu erkennen ist. Nach der ersten Bearbeitungsphase sind die konkaven Aussenflanken 22.1* fertig vorverzahnt und die konvexen Innenflanken 21.1* sind lediglich vorverzahnt.

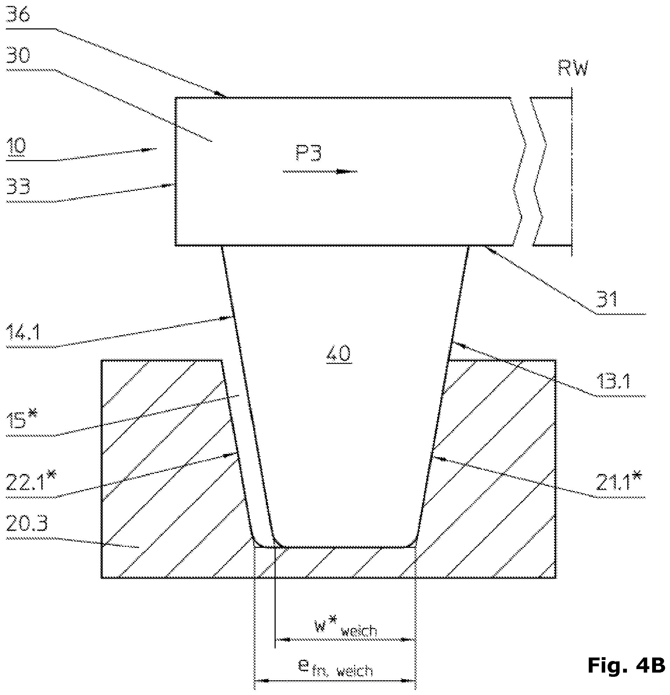

Nun werden in einer nachfolgenden zweiten Bearbeitungsphase dieselben Innenschneiden 13.1 des Vollwerkzeugs 40 zur fräsenden Fertigvorbearbeitung der konvexen Innenflanken 21.1* an dem Kegelrad 20.1 eingesetzt, wie in Fig. 4B gezeigt. Während der zweiten Bearbeitungsphase kommen nur die Innenschneiden 13.1 zum Einsatz. Vor der zweiten Bearbeitungsphase wird mindestens eine Maschineneinstellung der Fräsmaschine geändert. In Fig. 4B ist das Vorgeben einer anderen Maschineneinstellung schematisch durch den Pfeil P3 dargestellt. Das Verstellen der Maschineneinstellung umfasst eine Werkstückverdrehung und eine Änderung von Radiale und Wälzwinkel des Universalwerkzeugs 10. Das Verstellen der Maschineneinstellung kann aber auch auf andere Art und Weise erfolgen.

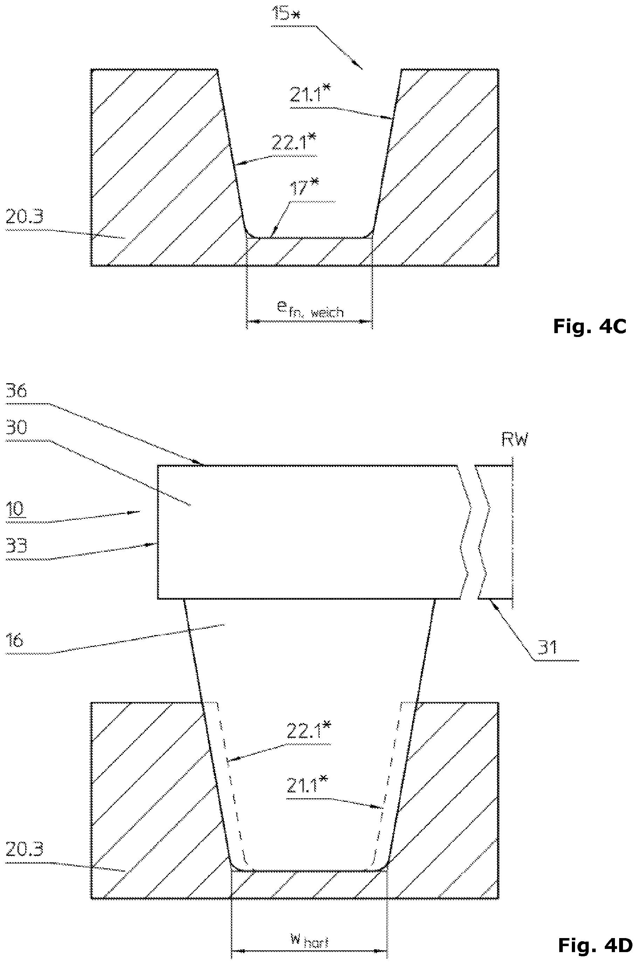

Nach der zweiten Bearbeitungsphase sind alle Flanken 21.1* und 22.1* fertig vorverzahnt. Die fertig vorverzahnte Zahnlücke 15* ist in Fig. 4C gezeigt. Sie hat nun eine Lückenweite e_{fn,weich}.

In weiteren Bearbeitungsschritten folgt nun typischerweise die Wärmebehandlung und anschliessend das Fertigverzahnverfahren. Vorzugsweise wird zum Fertigverzahnen ein Hartbearbeitungs-Verfahren und besonders vorzugsweise ein Schleifverfahren eingesetzt. Das Fertigverzahnen des Kegelrads 20.3 mit einem vollschneidenden Werkzeug 16 (z.B. eine Schleifscheibe) ist in Fig. 4D gezeigt. Die gestrichelten Flankenlinien 21.1* und 22.1* in Fig. 4D deuten an, dass das vollschneidende Werkzeug 16 in Normalenrichtung einer grössere Breite wₕₐᵣₜ hat als die Lückenweite e_{fn,weich}.

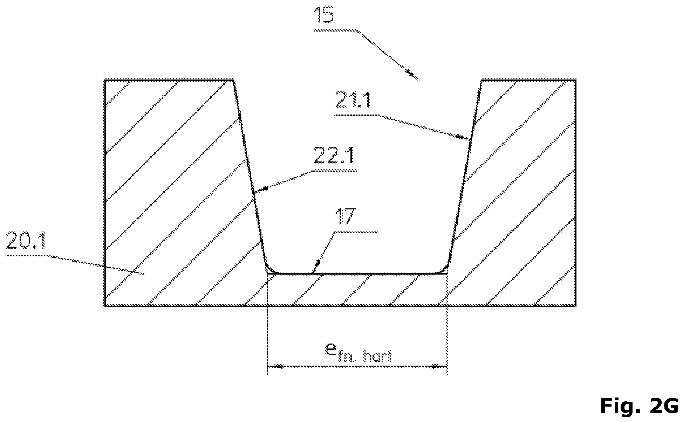

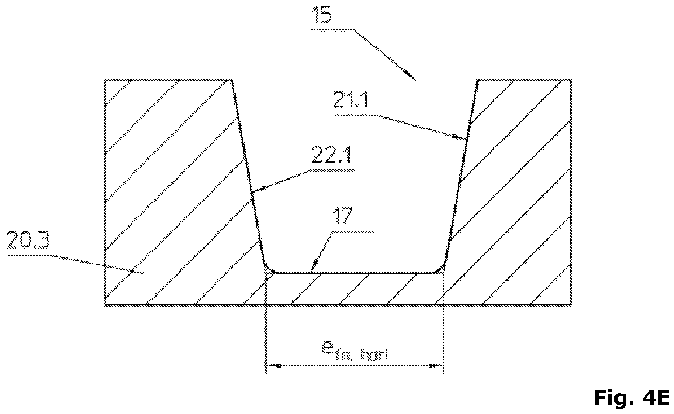

Schlussendlich hat die Zahnlücke 15 des Kegelrads 20.3 die in Fig. 4E gezeigte beispielhafte Form und Dimensionen. Die Innenflanke wird nun mit 21.1 und die Aussenflanke mit 22.1 bezeichnet. Die Figuren 4D und 4E entsprechen im Wesentlichen den Figuren 2F und 2G.

FIG. 5 zeigt eine Perspektivansicht eines beispielhaften Universalwälzfräswerkzeugs 10, das mit einem Stabmessersatz mit mehreren Paaren von Innenmessern 13 und Aussenmessern 14 bestückt ist. Das Universalwälzfräswerkzeug 10 hat typischerweise einen scheibenförmigen Grundkörper 30, an dessen Stirnfläche 31 Messerschächte 32 zum Einsetzen und Befestigen der Innenmesser 13 und Aussenmesser 14 vorgesehen sind. Im gezeigten Beispiel weist der Grundkörper 30 insgesamt vierzig Messerschächte 32 auf. Die vierzig Messerschächte 32 sind mit zwanzig Innenmessern 13 und zwanzig Aussenmessern 14 bestückt.

Vorzugsweise sind die Innenmesser 13 und Aussenmesser 14, oder die Vollmesser 40 in Stabmesserform ausgeführt und haben eine Länge des Messerschafts, die so gewählt ist, dass die Messerschäfte auf der rückwärtigen Stirnfläche des Grundkörpers 30 heraus ragen. In Fig. 5 ist der Messerschaft eines Aussenmessers 14 mit dem Bezugszeichen 19 gekennzeichnet.

An dem Grundkörper 30 sind vorzugsweise radial verlaufende Bohrungen 34 vorgesehen, die sich von der äusseren Mantelfläche 33 (die vorzugsweise zylinderförmig ist) radial nach Innen erstrecken und in den Messerschächten 32 enden. In diesen Bohrungen sitzen Schrauben, die hier nicht sichtbar sind. Zwei Befestigungsschrauben 35 sind neben dem Universalwälzfräswerkzeug 10 andeutungsweise gezeigt.

Die Befestigungsschrauben 35 ermöglichen es die Innenmesser 13 und Aussenmesser 14, oder die Vollmesser 40, in den Messerschächten 32 zu befestigen.

Die Messerschächte 32 haben in der Draufsicht eine rechteckige Form. Alle Messerschächte 32 sind radial angeordnet, wie in Fig. 5 anhand von zwei gestrichelten Linien L1, L2 angedeutet.

Die Aussenschneiden 14.1 sitzen auf einem äusseren Kreis, dessen Mittelpunkt mit dem Mittelpunkt M des Universalwälzfräswerkzeugs 10 zusammen fällt. Der äussere Kreis hat einen Kreisradius ra. Die Innenschneiden 13.1 sitzen auf einem inneren Kreis, dessen Mittelpunkt mit dem Mittelpunkt M des Universalwälzfräswerkzeugs 10 zusammen fällt. Der innere Kreis hat einen Kreisradius ri. Der Kreisradius ra ist grösser als ri.

RW bezeichnet hier die Rotationsachse des Werkzeugs 10. Die Rotationsachse tritt am Mittelpunkt M durch die Ebene hindurch, die vom Universalwälzfräswerkzeug 10 aufgespannt wird.

Es können in einer dritten Bearbeitungsphase die Paare von Innenschneiden 13.1 und Aussenschneiden 14.1 zur gleichzeitigen fräsenden Bearbeitung der konvexen Innenflanken 21.2* und der konkaven Aussenflanken 22.2* an diesem weiteren Kegelrad 20.2 eingesetzt. Eine Momentaufnahme dieser dritten Bearbeitungsphase ist in Fig. 3A gezeigt. Die Masse in Fig. 3A entsprechen den Massen in Fig. 2A. D.h. die Lückenweite (= Fussweite) e*_{fn,weich} ist bei beiden Kegelrädern 20.1 und 20.2 nach der ersten Bearbeitungsphase am Kegelrad 20.1, respektive nach der dritten Bearbeitungsphase am Kegelrad 20.2 gleich. In Fig. 3A ist ein Ausschnitt des zweiten Kegelrads 20.2 zu erkennen. Im gezeigten Moment bearbeiten die Innenschneiden 13.1 die konvexen Innenflanken 21.2* und die Aussenschneiden 14.1 die konkaven Aussenflanken 22.2* des zweiten Kegelrads 20.2. Im gezeigten Beispiel werden die konkaven Aussenflanken 22.2* fertig vorverzahnt, d.h. die Aussenschneiden 14.1 kommen nur in dieser dritten Bearbeitungsphase zur fräsenden Bearbeitung des zweiten Kegelrads 20.2 zum Einsatz. Die konvexen Innenflanken 21.2* sind jedoch während dritten Bearbeitungsphase nur vorverzahnt worden, d.h. sie haben noch nicht das erwünschte Aufmass erreicht. Daher werden in einer nachfolgenden vierten Bearbeitungsphase die Innenschneiden 13.1 zur fräsenden Fertigvorbearbeitung der konvexen Innenflanken 21.2* an diesem Kegelrad 20.2 eingesetzt, wie in Fig. 3B gezeigt. Die Masse in Fig. 3B entsprechen in etwa den Massen in Fig. 2C. Lediglich die Lückenweite (= Fussweite) e_{fn,weich} ist hier etwas anders als in Fig. 2C. Die Lückenweite (= Fussweite) e_{fn,weich} in Fig. 3B ist kleiner als in Fig. 2C.

Vor der vierten Bearbeitungsphase wird mindestens eine Maschineneinstellung der Fräsmaschine geändert. Vorzugsweise wird die Werkstückdrehachse der Fräsmaschine leicht gekippt, um während der vierten Bearbeitungsphase die Innenmesser 13 zur fräsenden Fertigvorbearbeitung der konvexen Innenflanken 21.2* einsetzen zu können. In Fig. 3B ist das Vorgeben einer anderen Maschineneinstellung durch den Pfeil P2 schematisch dargestellt.

Das zweite Kegelrad 20.2 unterscheidet sich dadurch von dem ersten Kegelrad 20.1, dass es eine andere Lückenweite e_{fn,weich} der Zahnlücken 15* im Zahnfußgrund 17* in Normalenrichtung hat. Im gezeigten Beispiel ist die Lückenweite e_{fn,weich} des zweiten Kegelrads 20.2 kleiner als die Lückenweite e_{fn,weich} des ersten Kegelrads 20.2. Ein drittes Kegelrad (nicht gezeigt), kann zum Beispiel nach der Fertigvorverzahnung eine Lückenweite e_{fn,weich} haben, die grösser ist als die Lückenweite e_{fn,weich} in den Figuren 2C und 3B. Es ist zu beachten, dass nicht nur die Lückenweite e_{fn,weich} bei den verschiedenen Kegelrädern anders ist.

Vorzugsweise ist das Universalwälzfräswerkzeug 10 so mit den Innenmessern 13 und Aussenmessern 14 bestückt und der Stabmessersatz so ausgebildet ist, dass sich eine positive Spitzenweite ergibt, wobei diese positive Spitzenweite w_{weich} kleiner ist als die kleinste Lückenweite e_{fn,weich} der Zahnlücken 15.1* des ersten Kegelrads 20.1 und der Zahnlücken 15.2* des zweiten Kegelrads 20.2.

In weiteren Bearbeitungsschritten folgt nun typischerweise die Wärmebehandlung und anschliessend das Fertigverzahnverfahren. Vorzugsweise wird zum Fertigverzahnen ein Hartbearbeitungs-Verfahren und besonders vorzugsweise ein Schleifverfahren eingesetzt. Das Fertigverzahnen des ersten Kegelrads 20.1 mit einem vollschneidenden Werkzeug 16 (z.B. eine Schleifscheibe) ist in Fig. 2F gezeigt. Die gestrichelten Flankenlinien 21.1* und 22.1* in Fig. 2F deuten an, dass das vollschneidende Werkzeug 16 in Normalenrichtung einer grössere Breite wₕₐᵣₜ hat als die Lückenweite e_{fn,weich}.

Das Fertigverzahnen des zweiten Kegelrads 20.2 erfolgt mit einem anderen vollschneidenden Werkzeug (nicht gezeigt), da das zweite Kegelrad 20.2 eine andere endgültige Lückenweite e_{fn,hart} als das erste Kegelrad 20.1 hat. Die endgültige Lückenweite e_{fn,hart} ist direkt mit der Breite wₕₐᵣₜ korreliert. Die Werkzeuge, die zur Hartbearbeitung eingesetzt werden, sind vorzugsweise mit den Werkzeugen identisch, die bisher in konventionellen Verfahren eingesetzt werden.

Beim Fertigverzahnen werden Werkzeuge 16 eingesetzt, die genau auf die endgültige Lückenweite e_{fn,hart} abgestimmt sind. Das Werkzeug 16 hat eine Spitzenweite wₕₐᵣₜ, die auf die zu erzielende endgültige Lückenweite e_{fn,hart} abgestimmt ist.

Schlussendlich hat die Zahnlücke 15 des ersten Kegelrads 20.1 die in Fig. 2G gezeigte beispielhafte Form und Dimensionen. Die Innenflanke wird nun mit 21.1 und die Aussenflanke mit 22.1 bezeichnet.

Während der ersten Bearbeitungsphase am ersten Kegelrad 20.1 und der dritten Bearbeitungsphase am zweiten Kegelrad 20.2 können jeweils auch die Innenschneiden 13.1 zur fräsenden Fertigvorbearbeitung der konvexen Innenflanken 21.1* und die Aussenschneiden 14.1 zur fräsenden Vorbearbeitung der konkaven Aussenflanken 22.1* eingesetzt werden, d.h. das in den Figuren 2A, 2C und 3A, 3B gezeigte Prinzip kann auch umgekehrt werden. In diesem Fall werden während der zweiten Bearbeitungsphase am ersten Kegelrad 20.1 und der vierten Bearbeitungsphase am zweiten Kegelrad 20.2 nur die Aussenmesser 14 zur fräsenden Fertigvorbearbeitung der konkaven Aussenflanken 22.1* eingesetzt.

Ähnliche Kegelräder 20.1, 20.2, die mit dem erfindungsgemässen Verfahren gefertigt werden können, haben eine ähnliche Geometrie, respektive ähnliche Abmessungen. Vorzugsweise werden hier Kegelräder als ähnlich angesehen, deren mittleres Normalmodul nur geringfügig abweicht, deren Eingriffswinkel nur geringfügig unterschiedlich ist und deren Übersetzungsverhältnisse vergleichbar sind, damit sich ähnliche Krümmungs-verhältnisse an den Zähnen ergeben. Der mittlere Normalmodul weicht vorzugsweise bei ähnlichen Kegelrädern 20.1, 20.2 nur um maximal ±10% ab. Der Eingriffswinkel weicht vorzugsweise bei ähnlichen Kegelrädern 20.1, 20.2 nur um maximal ±1° ab. Das Übersetzungsverhältnis weicht vorzugsweise bei ähnlichen Kegelrädern 20.1, 20.2 nur um maximal ±10% ab.

Im Folgenden ist ein Beispiel gegeben. Ein Universalmesserkopf 10, der gemäss Erfindung mit Aussenschneiden 14.1 und Innenschneiden 13.1 bestückt ist, kann z.B. erste Kegelräder fertigen, die eine Zähnezahl = 24 und ein Übersetzungsverhältnis i = 2 haben. Mit dem gleichen Universalmesserkopf 10 können zweite Kegelräder gefertigt werden, die eine Zähnezahl = 21 und ein Übersetzungsverhältnis i = 2,1 haben.

**Bezugszeichenliste**

| | |
|---|---|
| Werkzeug | 1 |
| Werkstück | 2 |
| Innenmesser | 3, IM |
| Aussenmesser | 4, AM |
| endgültige Zahnlücke | 5 |
| Zahnlücke nach dem Vorverzahnen | 5* |
| vollschneidendes Werkzeug für das Hartverzahnen | 6 |
| | |
| Universalfräswerkzeug | 10 |
| Innenmesser | 13, IM |
| Innenschneide eines Vollmessers | 13.1 |
| Aussenmesser | 14, AM |
| Aussenschneide eines Vollmessers | 14.1 |
| Zahnlücke nach dem Härten und Hartverzahnen | 15 |
| Zahnlücke vor dem Härten | 15* |
| vollschneidendes Werkzeug für das Hartverzahnen | 16 |
| Zahnfußgrund nach dem Vorverzahnen | 17 |
| Zahnfußgrund nach dem Härten und Hartverzahnen | 17 |
| Späne | 18.1, 18.2, 18.3 |
| Messerschaft | 19 |
| Werkstück | 20.1, 20.2, 20.3,... |
| konvexe Innenflanken des ersten Kegelrads 20.1 nach dem Vorverzahnen | 21.1* |
| konvexe Innenflanken des ersten Kegelrads 20.1 nach dem Härten und Hartverzahnen | 21.1 |
| konvexe Innenflanken des zweiten Kegelrads 20.2 nach dem Vorverzahnen | 21.2* |
| konvexe Innenflanken des zweiten Kegelrads 20.2 nach dem Härten und Hartverzahnen | 21.2 |
| konkave Aussenflanken des ersten Kegelrads 20.1 | 22.1* |
| konkave Aussenflanken des zweiten Kegelrads 20.2 | 22.2* |
| Grundkörper | 30 |
| werkstückseitige Stirnfläche | 31 |
| Messerschacht | 32 |
| äussere Mantelfläche | 33 |
| radial verlaufende Bohrungen | 34 |
| Befestigungsschrauben | 35 |
| werkstückabgewandte Stirnfläche | 36 |
| Vollmesser | 40 |
| Dicke des Grundkörpers 30 | D1 |
| Lückenweite (= Fussweite) der vorverzahnten Zahnlücke 15* nach einem ersten Bearbeitungsschritt im Zahngrund 17* in Normalenrichtung | e*_{fn,weich} |
| effektive Lückenweite der fertig vorverzahnten Zahnlücke 5* oder 15* im Zahngrund 17* in Normalenrichtung | e_{fn,weich} |
| endgültige Lückenweite im Zahngrund 17 in Normalenrichtung | e_{fn,hart} |
| Übersetzungsverhältnis | i |
| gestrichelten Linien | L1, L2 |
| Messerkopfmittelpunkt | M |
| eine ganze Zahl grösser zwei | n |
| Vorgeben einer anderen Maschineneinstellung | P1, P2, P3 |
| Kreisradius | ra |
| Aussendurchmesser des Grundkörpers 30 | RA |
| Kreisradius | ri |
| Rotationsachse des Werkzeugs 10 | RW |
| Die Werkzeugspitzenbreite der Innen- und Aussenmesser 3, 4 im Zahngrund 17 in Normalenrichtung | s_{a0, weich} |
| Spitzenweite der beiden Messer 3, 4, 13, 14 zusammen im Zahngrund 17* in Normalenrichtung | w_{weich} |
| Spitzenweite des vollschneidenden Werkzeugs 6 oder 16 im Zahngrund 17 in Normalenrichtung | wₕₐᵣₜ |

## Patentansprüche

1. Verfahren zum Weichfräsen von Kegelradverzahnungen mehrerer ähnlicher Kegelräder (20.1, 20.2), wobei ein Universalwälzfräswerkzeug (10) auf einer ersten Fräsmaschine zum Einsatz gebracht wird, um ein erstes Kegelrad (20.1) der mehreren ähnlichen Kegelräder vorzuverzahnen, wobei das Universalwälzfräswerkzeug (10) so mit einem Stabmessersatz mit mehreren Paaren von Innenschneiden (13.1) und Aussenschneiden (14.1) bestückt und der Stabmessersatz so ausgebildet ist, dass sich eine positive Spitzenweite ergibt, wobei diese positive Spitzenweite (w_{weich}) kleiner ist als die kleinste Lückenweite (e_{fn,weich}) von Zahnlücken (15.1*) des ersten Kegelrads (20.1) der mehreren ähnlichen Kegelräder und von Zahnlücken (15.2*) eines zweiten Kegelrads (20.2) der mehreren ähnlichen Kegelräder,
wobei beim Weichfräsen des ersten Kegelrads (20.1) der mehreren ähnlichen Kegelräder
- in einer ersten Bearbeitungsphase die Paare (13.1, 14.1) zur gleichzeitigen fräsenden Bearbeitung von konvexen Innenflanken (21.1*) und von konkaven Aussenflanken (22.1*) an diesem Kegelrad (20.1) eingesetzt werden,
- in einer nachfolgenden zweiten Bearbeitungsphase entweder die Aussenschneiden (14.1) zur fräsenden Fertigvorbearbeitung der konkaven Aussenflanken (22.1*) oder die Innenschneiden (13.1) zur fräsenden Fertigvorbearbeitung der konvexen Innenflanken (21.1*) an diesem Kegelrad (20.1) eingesetzt werden, wobei vor der zweiten Bearbeitungsphase eine Werkstückverdrehung und eine Änderung von Radiale und Wälzwinkel des Universalwälzfräswerkzeug (10) vorgenommen wird und während der zweiten Bearbeitungsphase die jeweils anderen Schneiden (13.1 oder 14.1) nicht zum Einsatz kommen,
wobei das Universalwälzfräswerkzeug (10) mit dem selben Stabmessersatz auf der ersten oder einer zweiten Fräsmaschine zum Einsatz gebracht wird, um das zweite Kegelrad (20.2) der mehreren ähnlichen Kegelräder (20.1, 20.2) vorzuverzahnen, das sich von dem ersten Kegelrad (20.1) der mehreren ähnlichen Kegelräder (20.1, 20.2) dadurch unterscheidet, dass es eine andere Lückenweite (e_{fn,weich}) der Zahnlücken (15*) im Zahnfußgrund (17*) in Normalenrichtung hat,
wobei beim Weichfräsen des zweiten Kegelrads (20.2) der mehreren ähnlichen Kegelräder
- in einer dritten Bearbeitungsphase die Paare (13.1, 14.1) zur gleichzeitigen fräsenden Bearbeitung von konvexen Innenflanken (21.2*) und von konkaven Aussenflanken (22.2*) an dem zweiten Kegelrad (20.2) eingesetzt werden,
- in einer nachfolgenden vierten Bearbeitungsphase entweder die Aussenschneiden (14.1) zur fräsenden Fertigvorbearbeitung der konkaven Aussenflanken (22.2*) oder die Innenschneiden (13.1) zur fräsenden Fertigvorbearbeitung der konvexen Innenflanken (21.2*) an diesem Kegelrad (20.2) eingesetzt werden, wobei vor der vierten Bearbeitungsphase mindestens eine Maschineneinstellung der Fräsmaschine geändert wird und während der vierten Bearbeitungsphase die jeweils anderen Schneiden (13.1 oder 14.1) nicht zum Einsatz kommen.

2. Verfahren nach Anspruch 1, wobei
- in der ersten Bearbeitungsphase die Innenschneiden (13.1) zur fräsenden Fertigvorbearbeitung der konvexen Innenflanken (21.1*) und die Aussenschneiden (14.1) zur fräsenden Vorbearbeitung der konkaven Aussenflanken (22.1*) eingesetzt werden, und
- in der zweiten Bearbeitungsphase nur die Aussenschneiden (14.1) zur fräsenden Fertigvorbearbeitung der konkaven Aussenflanken (22.1*) eingesetzt werden.

3. Verfahren nach Anspruch 1, wobei
- in der ersten Bearbeitungsphase die Innenschneiden (13.1) zur fräsenden Vorbearbeitung der konvexen Innenflanken (21.1*) und die Aussenschneiden (14.1) zur fräsenden Fertigvorbearbeitung der konkaven Aussenflanken (22.1*) eingesetzt werden, und
- in der zweiten Bearbeitungsphase nur die Innenschneiden (13.1) zur fräsenden Fertigvorbearbeitung der konvexen Innenflanken (21.1*) eingesetzt werden.

4. Verfahren nach einem der Ansprüche 1 bis 3, **dadurch gekennzeichnet, dass** das erste Kegelrad (20.1) nach dem Vorverzahnen mit dem Universalwälzfräswerkzeug (10) eine andere Lückenweite (e_{fn,weich}) und ein anderes Aufmass der Lückenweite hat als das zweite Kegelrad (20.2) nach dem Vorverzahnen.

5. Verfahren nach einem der Ansprüche 1 bis 4, **dadurch gekennzeichnet, dass** jedes der ähnlichen Kegelräder (20.1, 20.2) nach dem Vorverzahnen einem Fertigverzahnverfahren unterzogen wird, wobei das Fertigverzahnverfahren ein Hartbearbeitungs-Verfahren und vorzugsweise ein Schleifverfahren umfasst.

6. Verfahren nach Anspruch 5, **dadurch gekennzeichnet, dass** die Kegelräder (20.1, 20.2) vor dem Fertigverzahnverfahren einer Temperaturbehandlung unterzogen werden.

7. Verfahren nach Anspruch 1, **dadurch gekennzeichnet, dass** die positive Spitzenweite kleiner ist als die kleinste Soll-Lückenweite aller Kegelräder (20.1, 20.2) der mehreren ähnlichen Kegelräder.

8. Verfahren nach einem der Ansprüche 1 bis 7, **dadurch gekennzeichnet, dass** das Universalwälzfräswerkzeug (10)
- entweder mit mehreren paarweise angeordneten Innenmessern (13) und Aussenmessern (14) bestückt ist, wobei jedes der Innenmesser (13) eine Innenschneide (13.1) und jedes der Aussenmesser (14) eine Aussenschneide (14.1) umfasst,
- oder mit mehreren Vollmessern (40) bestückt ist, wobei jedes der Vollmesser (40) eine Innenschneide (13.1) und eine Aussenschneide (14.1) umfasst.

## Claims

1. Method for soft milling of bevel gear teeth of several similar bevel gears (20.1, 20.2), wherein
a universal milling tool (10) is being employed in a first milling machine in order to mill a first bevel gear (20.1) of the plurality of similar bevel gears, wherein the universal milling tool (10) is equipped with a set of bar cutters comprising several pairs of inner cutting edges (13.1) and outer cutting edges (14.1), and the set of bar cutters is designed so that a positive tip distance results, wherein this positive tip distance (w_{soft}) is smaller than the smallest gap distance (e_{fn, soft}) of tooth gaps (15.1*) of the first bevel gear (20.1) of the plurality of similar bevel gears and of tooth gaps (15.2*) of a second bevel gear (20.2) of the plurality of similar bevel gears,
wherein during the soft milling of the first bevel gear (20.1) of the plurality of similar bevel gears
- in a first machining phase, the pairs (13.1, 14.1) are employed for a simultaneous milling machining of convex inner flanks (21.1*) and of concave outer flanks (22.1*) on this bevel gear (20.1),
- in a subsequent second machining phase, either the outer cutting edges (14.1) are employed for a milling finishing pre-machining of the concave outer flanks (22.1*) or the inner cutting edges (13.1) are employed for the milling finishing pre-machining of the convex inner flanks (21.1*) on this bevel gear (20.1), wherein prior to the second machining phase a rotation of the workpiece and a change of the radial and the rolling angle of the universal milling tool (10) are provided for and during the second machining phase the respective other cutting edges (13.1 or 14.1) are not applied,
wherein the universal milling tool (10) is employed with the same set of bar cutters on the first or a second milling machine, so as to pre-cut teeth of a second bevel gear (20.2) of the plurality of similar bevel gears (20.1, 20.2), which differs from the first bevel gear (20.1) of the plurality of similar bevel gear (20.1, 20.2) in that it has a different gap width (e_{fn,soft}) of the tooth gaps (15*) at the tooth base bottom (17*) in the normal direction,
wherein during the soft milling of the second bevel gear (20.2) of the plurality of similar bevel gears
- in a third machining phase, the pairs (13.1, 14.1) are employed for the simultaneous milling machining of convex inner flanks (21.2*) and of concave outer flanks (22.2*) on the second bevel gear (20.2),
- in a subsequent fourth machining phase, either the outer cutting edges (14.1) are employed for the milling finishing pre-machining of the concave outer flanks (22.2*) or the inner cutting edges (13.1) are employed for the milling finishing pre-machining of the convex inner flanks (21.2*) on this bevel gear (20.2), wherein prior to the fourth machining phase at least one machine setting of the milling machine is changed and during the fourth machining phase the respective other cutting edges (13.1 or 14.1) are not employed.

2. Method according to claim 1, wherein
- in the first machining phase, the inner cutting edges (13.1) are employed for the milling finishing pre-machining of the convex inner flanks (21.1*) and the outer cutting edges (14.1) are employed for the milling pre-machining of the concave outer flanks (22.1*), and
- in the second machining phase, only the outer cutting edges (14.1) are employed for the milling finishing pre-machining of the concave outer flanks (22.1*).

3. Method according to claim 1, wherein
- in the first machining phase, the inner cutting edges (13.1) are employed for the milling pre-machining of the convex inner flanks (21.1*) and the outer cutting edges (14.1) are employed for the milling finishing pre-machining of the concave outer flanks (22.1*), and
- in the second machining phase, only the inner cutting edges (13.1) are employed for the milling finishing pre-machining of the convex inner flanks (21.1*).

4. Method according to one of the claims 1 through 3, **characterized in that** the first bevel gear (20.1) after the gear pre-cutting with the universal hobbing tool (10), has a different gap width (e_{fn, soft}) and a different dimension of the gap width as compared to the second bevel gear (20.2) after the gear pre-cutting.

5. Method according to any one of the claims 1 to 4, **characterized in that** after the gear pre-cutting, each of the similar bevel gears (20.1, 20.2) is subjected to a finishing toothing method, wherein the finishing toothing method comprises a hard machining method and preferably a grinding method.

6. Method according to claim 5, **characterized in that** the bevel gears (20.1, 20.2) are subjected to a temperature treatment prior to the finishing gear pre-cutting method.

7. Method according to claim 5, **characterized in that** the positive tip distance is smaller than the smallest rated gap distance of all bevel gears (20.1, 20.2) of the plurality of similar bevel gears.

8. Method according to any one of the claims 1 to 7, **characterized in that** the universal milling tool (10)
- either is equipped with a plurality of pairwisely arranged inner cutters (13) and outer cutters (14), wherein each of the inner cutters (13) comprises an inner cutting edge (13.1) and each of the outer cutters (14) comprises an outer cutting edge (14.1),
- or is equipped with a plurality of solid cutters (40), wherein each solid cutter (40) comprises an inner cutting edge (13.1) and an outer cutting edge (14.1).

## Revendications

1. Procédé pour fraiser des engrenages de roues coniques de plusieurs roues coniques semblables (20.1, 20.2), dans lequel on utilise un outil de taillage par développante universel (10) sur une première fraiseuse pour pré-tailler une première roue conique (20.1) de la pluralité de roues coniques semblables, l'outil de taillage par développante universel (10) étant équipé d'un ensemble de lames de coupe avec plusieurs paires de tranchants intérieurs (13.1) et de tranchants extérieurs (14.1) et dans lequel l'ensemble de lames de coupe est réalisé de telle façon qu'il en résulte un entre-pointes positif, cet entre-pointes positif (WWEICH) étant inférieur au plus petit intervalle (e_{fn, WEICH}) des entredents (15.1*) de la première roue conique (20.1) de la pluralité de roues coniques semblables et des entredents (15.2*) d'une deuxième roue conique (20.2) de la pluralité de roues coniques semblables,
dans lequel, lors du fraisage de la première roue conique (20.1) de la pluralité de roues coniques semblables
- dans une première phase d'usinage on utilise la paire (13.1, 14.1) pour usiner par fraisage en même temps les flancs intérieurs convexes (21.1*) et les flancs extérieurs concaves (22.1*) de cette roue conique (20.1),
- dans une deuxième phase d'usinage subséquente, on utilise soit les tranchants extérieurs (14.1) pour pré-fraiser les flancs extérieurs concaves (22.1*) soit les tranchants intérieurs (13.1) pour pré-fraiser les flancs intérieurs convexes (21.1*) de cette roue conique (20.1), dans lequel, avant la deuxième phase d'usinage, on procède à une rotation de la pièce et à une modification de la radiale et des angles de taille en développante de l'outil de taillage par développante universel (10) et dans lequel, pendant la deuxième phase d'usinage, on n'utilise pas les autres tranchants (13.1, 14.1),
dans lequel l'outil de taillage par développante universel (10) est utilisé avec le même ensemble de lames sur la première ou une deuxième fraiseuse pour pré-tailler la deuxième roue conique (20.2) de la pluralité de roues coniques semblables (20.1, 20.2), laquelle deuxième roue conique se distinguant de la première roue conique (20.1) de la pluralité de roues coniques semblables (20.1, 20.2) en ce qu'elle a un autre intervalle (e_{fn, WEICH}) des entredents (15*) dans le pied de dent (17*) dans le sens normal,
dans lequel lors du fraisage de la deuxième roue conique (20.2) de la pluralité de roues coniques semblables
- dans une troisième phase d'usinage, on utilise la paire (13.1, 14.1) pour usiner par fraisage en même temps les flancs intérieurs convexes (21.2*) et les flancs extérieurs concaves (22.2*) de la deuxième roue conique (20.2),
- dans une quatrième phase d'usinage subséquente, on utilise soit les tranchants extérieurs (14.1) pour pré-fraiser les flancs extérieurs concaves (22.2*) soit les tranchants intérieurs (13.1) pour pré-fraiser les flancs intérieurs convexes (21.2*) de cette roue conique (20.2), dans lequel, avant la quatrième phase d'usinage, on modifie au moins un réglage de machine de la fraiseuse et, pendant la quatrième phase d'usinage, on n'utilise pas les autres tranchants (13.1, 14.1).

2. Procédé selon la revendication 1, dans lequel
- dans la première phase d'usinage, on utilise les tranchants intérieurs (13.1) pour pré-fraiser les flancs intérieurs convexes (21.1*) et les tranchants extérieurs (14.1) pour pré-fraiser les flancs extérieurs concaves (22.1*), et
- dans la deuxième phase d'usinage, on utilise uniquement les tranchants extérieurs (14.1) pour pré-fraiser les flancs extérieurs concaves (22.1*).

3. Procédé selon la revendication 1, dans lequel
- dans la première phase d'usinage, on utilise les tranchants intérieurs (13.1) pour pré-fraiser les flancs intérieurs convexes (21.1*) et les tranchants extérieurs (14.1) pour pré-fraiser les flancs extérieurs concaves (22.1*), et
- dans la deuxième phase d'usinage, on utilise uniquement les tranchants intérieurs (13.1) pour pré-fraiser les flancs intérieurs convexes (21.1*).

4. Procédé selon l'une des revendications 1 à 3, **caractérisé en ce que** la première roue conique (20.1), après le pré-taillage avec l'outil de taillage par développante universel (10), a un autre intervalle (e_{fn, WEICH}) et une autre mesure de l'intervalle que la deuxième roue conique (20.2) après le pré-taillage.

5. Procédé selon l'une des revendications 1 à 4, **caractérisé en ce que** chacune des roues coniques semblables (20.1, 20.2), après le pré-taillage, est soumise à un taillage par développante, le taillage par développante comprenant un procédé d'usinage dur et de préférence un procédé de meulage.

6. Procédé selon la revendication 5, **caractérisé en ce que** les roues coniques (20.1, 20.2) sont soumises, avant le taillage par développante, à un traitement thermique.

7. Procédé selon la revendication 1, **caractérisé en ce que** l'entre-pointes positif est inférieur au plus petit intervalle théorique de toutes les roues coniques (20.1, 20.2) de la pluralité des roues coniques semblables.

8. Procédé selon l'une des revendications 1 à 7, **caractérisé en ce que** l'outil de taillage par enveloppante universel (10)
- est soit muni de plusieurs lames intérieures (13) agencées par paires et de lames extérieures (14), chacune des lames intérieures (13) comprenant un tranchant intérieur (13.1) et chacune des lames extérieures (14) comprenant un tranchant extérieur (14.1),
- est soit équipé de plusieurs lames pleines (40), chacune des lames pleines (40) comprenant un tranchant intérieur (13.1) et un tranchant extérieur (14.1).
